# DEMANDE DE BREVET EUROPEEN

(11) **EP 1 677 555 A1**
(43) Date de publication de la demande: **05.07.2006**
(21) Numéro de dépôt: 05301105.2
(22) Date de dépôt: 23.12.2005
(51) Int. Cl.: H04Q 7/34

(54) **Dispositif de traitement de donnees de trafic pour l'optimisation du controle de la qualite de service au sein d'un reseau de communication**

(30) Priorité: 31.12.2004 FR 0453273
(71) Demandeur: Alcatel, 75008 Paris (FR)
(72) Inventeur: Brethereau, Alain, 78220, Viroflay (FR); Houllier, Jean-Roch, 91240, Saint-Michel sur Orge (FR); Brigant, Eric, 78140, Velizy-Villacoublay (FR); De Mathan, Béatrix, 75016, Paris (FR); Landrault, Antoine, 78120, Rambouillet (FR)
(74) Mandataire: El Manouni, Josiane

(57) **Abrégé**

Un dispositif (D) est dédié au traitement de données de trafic pour un système d'optimisation (OO) d'un réseau de communication comportant des éléments de réseau (Ci), par lesquels passent des trafics définis localement par des valeurs de paramètre(s). Ce dispositif (D) comprend des moyens de traitement (MT) chargés, d'une part, de déterminer pour des éléments choisis du réseau au moins un modèle de trafic à partir de valeurs successives mesurées d'au moins un paramètre représentatif de ce trafic, et d'autre part, de comparer ces modèles de trafic déterminés à des modèles de trafic de base représentatifs chacun d'un type de trafic, afin d'associer à chaque élément de réseau au moins un modèle de trafic de base lorsqu'un modèle de trafic mesuré qui lui correspond est comparable à ce modèle de trafic de base.

## Description

L'invention concerne les réseaux de communication, et plus particulièrement l'optimisation du contrôle de la qualité de service (ou QoS) au sein de tels réseaux.

Les coûts de déploiement et de fonctionnement des réseaux de communication obligent leurs opérateurs à optimiser l'utilisation de leurs ressources de communication de manière à assurer un certain équilibre entre les gains et la qualité de service (ou QoS) mise à la disposition de leurs clients utilisateurs. C'est tout particulièrement le cas des réseaux radio mobiles ou cellulaires.

Comme le sait l'homme de l'art, la gestion des paramètres de réseau, permettant de contrôler l'utilisation des ressources d'un réseau, est une tâche difficile, complexe et de surcroît permanente en cas d'extension et/ou de densification du réseau. Cette gestion nécessite l'utilisation d'un système (ou outil) d'optimisation de réseau, comme par exemple celui appelé RNO® (pour « Radio Network Optimization »), développé par la société ALCATEL pour les réseaux radio cellulaires. Un tel système permet de suivre la qualité de service au sein de certains éléments de réseau, comme par exemple des cellules, d'analyser les causes de problèmes de qualité de service et de proposer des solutions pour résoudre ces problèmes.

Le système RNO® permet de définir des groupes de cellules en fonction de certains critères, comme par exemple l'appartenance à une zone géographique donnée, afin de suivre et d'étudier la qualité de service au sein de certains au moins de ces groupes. Les critères de définition des groupes de cellules reposant sur des indicateurs ou des paramètres logiques, ils ne permettent de gérer qu'une partie des paramètres impliqués dans l'utilisation des ressources. Par exemple, il n'est pas possible de tenir compte de l'impact du comportement des abonnés.

En outre, une optimisation reposant sur la seule notion de groupes de cellules ne peut pas être complète, notamment du fait que d'autres types d'éléments de réseau et de notions (comme par exemple les transferts intercellulaires de communications (ou « handovers »)) interviennent dans le contrôle de l'utilisation des ressources.

L'invention a donc pour but d'améliorer la situation, notamment dans les réseaux de communication radio.

Elle propose à cet effet un dispositif de traitement de données de trafic, pour un système d'optimisation d'un réseau de communication comportant des éléments de réseau par lesquels passent des trafics définis localement par des valeurs de paramètre(s).

Ce dispositif de traitement se caractérise par le fait qu'il comprend des moyens de traitement (MT) agencés, d'une part, pour déterminer pour des éléments choisis du réseau au moins un modèle de trafic à partir de valeurs successives mesurées d'au moins un paramètre représentatif dudit trafic, et d'autre part, pour comparer les modèles de trafic déterminés à des modèles de trafic de base représentatifs chacun d'un type de trafic, de manière à associer un modèle de trafic de base à l'un de ces éléments de réseau lorsqu'un modèle de trafic mesuré qui lui correspond est comparable audit modèle de trafic de base.

On entend ici par « modèle de trafic » tout modèle représentatif de l'évolution d'un trafic (de voix et/ou de données), en terme de volume de télécommunication, et/ou relatif à la façon dont se déroule une communication associée à un trafic, comme par exemple la durée d'une communication.

Le dispositif de traitement selon l'invention peut comporter d'autres caractéristiques qui peuvent être prises séparément ou en combinaison, et notamment :
- ses moyens de traitement peuvent être chargés de définir des ensembles d'objets (ou en anglais « object zones ») regroupant chacun des éléments de réseau (physiques et/ou logiques) associés à au moins un même modèle de trafic de base ;
- les ensembles d'objets peuvent être choisis parmi des groupes d'éléments de réseau et des groupes dits de mouvement ;
- ses moyens de traitement peuvent être chargés d'effectuer leurs comparaisons au moyen d'au moins un critère de proximité ;
- ses moyens de traitement peuvent être chargés de déterminer les modèles de trafic à partir de valeurs successives d'au moins un paramètre représentatif du trafic en fonction de dates choisies et d'heures choisies de ces dates. Certains au moins des modèles de trafic peuvent être déterminés sous une forme bidimensionnelle (2D) ou sous une forme tridimensionnelle (3D) ;
- des moyens d'analyse chargés, d'une part, de collecter des modèles de trafic, associés à certains au moins des éléments de réseau et obtenus de façon périodique (selon une première période choisie), afin de disposer périodiquement (selon une seconde période, multiple de la première période), pour chacun de ces éléments de réseau, d'un premier ensemble de modèles de trafic, et d'autre part, d'analyser les modèles de trafic de chaque premier ensemble afin de déduire un état de stabilité pour chaque premier ensemble obtenu pendant chaque seconde période ;
   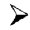 les moyens d'analyse peuvent être chargés d'analyser les modèles de trafic de chaque premier ensemble en les comparant chacun à un modèle de trafic de base. Ces comparaisons peuvent par exemple être effectuées au moyen d'au moins un critère de proximité ;
   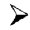 les moyens d'analyse peuvent être chargés de déterminer des changements d'état de stabilité (ou de stabilité) par comparaison d'états de stabilité associés à un même élément de réseau et obtenus pendant au moins deux secondes périodes successives ;
   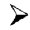 les moyens d'analyse peuvent être chargés de déduire certains au moins des états de stabilité en excluant de leur comparaison l'un au moins des modèles de trafic de l'ensemble qui satisfait à au moins un critère choisi.

L'invention propose également un système (ou outil) d'organisation, pour un réseau de communication comportant des éléments de réseau par lesquels passent des trafics définis localement par des valeurs de paramètre(s), équipé d'un dispositif de traitement du type de celui présenté ci-avant.

L'invention est particulièrement bien adaptée, bien que de façon non exclusive, aux réseaux de communication radio, notamment de type cellulaire (ou mobile). Elle concerne d'une manière générale tout type de réseau de communication, y compris les réseaux fixes commutés (plus connus sous les acronymes anglais POTS (pour « Plain Old Telephone Service ») et PSTN (pour « Public Switched Telephony Network »)), ainsi que les réseaux locaux filaires (plus connus sous l'acronyme anglais LAN (pour « Local Area Network »)) ou sans fil (plus connus sous l'acronyme anglais WLAN (pour « Wireless LAN »)).

D'autres caractéristiques et avantages de l'invention apparaîtront à l'examen de la description détaillée ci-après, et des dessins annexés, sur lesquels :
- la figure 1 illustre de façon très schématique un réseau de communication cellulaire équipé d'un exemple de réalisation d'un dispositif de traitement selon l'invention,
- la figure 2 est un diagramme tridimensionnel (3D) illustrant l'évolution du trafic au niveau d'un élément de réseau, en fonction du jour de la semaine et de l'heure de la journée,
- la figure 3 est un diagramme bidimensionnel (2D) illustrant une simplification de l'évolution du trafic de la figure 2,
- la figure 4 est un diagramme bidimensionnel (2D) illustrant une simplification de l'évolution du trafic de la figure 3,
- les figures 5A à 5C illustrent respectivement un modèle de trafic 2D issu du diagramme 2D de la figure 4, un exemple de modèle de trafic de base, et le résultat de la comparaison du modèle de trafic de la figure 5A au modèle de trafic de base de la figure 5B,
- la figure 6 est un diagramme tridimensionnel (3D) d'un exemple de modèle de trafic 3D représentatif de l'évolution d'un trafic au niveau d'un élément de réseau, en fonction du jour de la semaine et de l'heure de la journée,
- la figure 7 est un diagramme bidimensionnel (2D) illustrant un exemple de modèle de trafic de base correspondant à un trafic dans une zone d'habitation en fonction du jour de la semaine et de l'heure de la journée,
- la figure 8 est un diagramme bidimensionnel (2D) illustrant un exemple de modèle de trafic de base correspondant à un trafic dans une zone d'affaires en fonction du jour de la semaine et de l'heure de la journée,
- la figure 9 est un diagramme bidimensionnel (2D) illustrant un exemple de modèle de trafic de base correspondant à un trafic dans un centre commercial en fonction du jour de la semaine et de l'heure de la journée
- la figure 10 illustre une situation conduisant à la détermination d'un état de stabilité,
- la figure 11 illustre une situation conduisant à une détection de stabilité,
- la figure 12 illustre une situation conduisant à une détection de perte de stabilité,
- la figure 13 illustre une situation conduisant à une détection de changement de stabilité.

Les dessins annexés pourront non seulement servir à compléter l'invention, mais aussi contribuer à sa définition, le cas échéant.

L'invention a pour objet de permettre une optimisation étendue de l'utilisation des ressources de communication d'un réseau de communication.

On considère dans ce qui suit que le réseau de communication est un réseau radio cellulaire (ou mobile), comme par exemple un réseau GSM, ou GPRS/EDGE, ou encore UMTS. Par conséquent, les ressources sont ici des canaux radio. Mais, l'invention est adaptée à tout type de réseau de communication, et notamment aux réseaux fixes commutés (POTS ou PSTN) et aux réseaux locaux filaires (LAN) ou sans fil (WLAN).

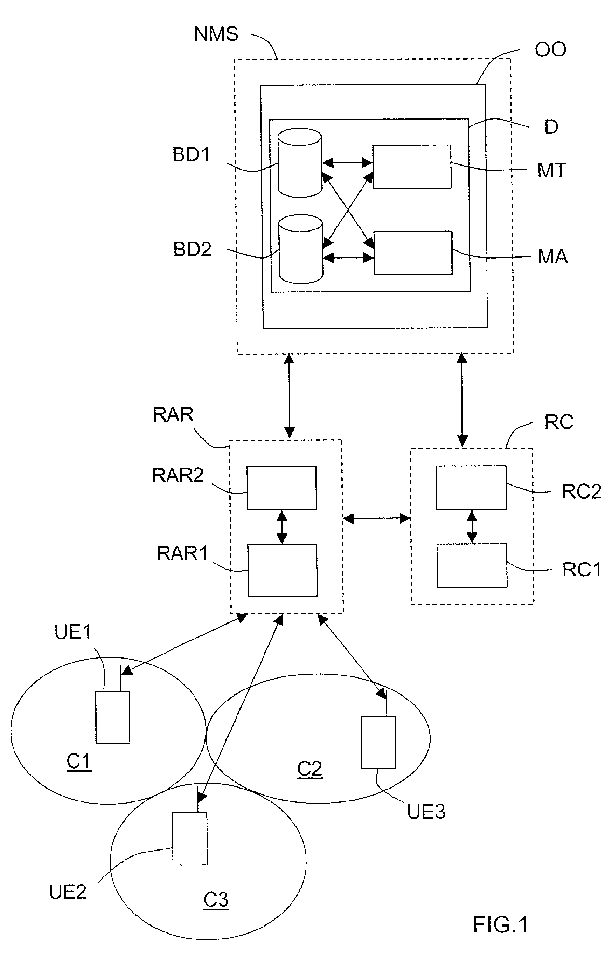

On se réfère tout d'abord à la figure 1 pour décrire sommairement un réseau radio cellulaire pouvant mettre en oeuvre l'invention.

Un réseau radio cellulaire peut, d'une façon très schématique mais néanmoins suffisante à la compréhension de l'invention, être résumé à un réseau de commutation (ou « Core Network ») RC couplé à un réseau d'accès radio RAR (appelé UTRAN dans le cas d'un réseau UMTS et BSS dans le cas d'un réseau GSM), lui-même raccordé à un système de gestion de réseau NMS (pour « Network Management System »).

Le réseau d'accès radio RAR comporte un ensemble RAR1 de stations de base (appelées Node Bs dans le cas d'un réseau UMTS et BTSs dans le cas d'un réseau GSM) et de contrôleurs de réseau radio ou noeuds (appelés RNCs dans le cas d'un réseau UMTS et BSCs dans le cas d'un réseau GSM), raccordés entre eux, et un gestionnaire de réseau d'accès RAR2 raccordé à l'ensemble RAR1. Le système de gestion de réseau NMS est par ailleurs relié aux stations de base via les contrôleurs de réseau radio.

Chaque station de base (Node B ou BTS) est associée à au moins une cellule Ci couvrant une zone radio dans laquelle des terminaux mobiles UEj peuvent établir (ou poursuivre) des liaisons radio.

On entend ici par « terminal mobile » tout terminal de communication mobile ou portable capable d'échanger des données sous la forme de signaux radio, soit avec un autre terminal ou équipement de réseau, via leur(s) réseau(x) de rattachement, soit avec son propre réseau de rattachement. Il pourra donc s'agir, par exemple, de téléphones mobiles, ou d'ordinateurs fixes ou portables ou d'assistants personnels numériques (ou PDA) équipés d'un module de communication radio.

Dans l'exemple illustré, trois cellules (C1-C3, i = 1 à 3) ont été représentées. Mais, l'indice i peut prendre n'importe quelle valeur non nulle. Par ailleurs, dans l'exemple illustré, trois terminaux mobiles (UE1-UE3, j = 1 à 3) ont été représentés. Mais, l'indice j peut prendre n'importe quelle valeur non nulle.

Le réseau de commutation RC comprend un ensemble d'équipements de réseau RC1, raccordé aux contrôleurs de réseau radio (RNCs ou BSCs) de l'ensemble RAR1, ainsi qu'un gestionnaire de réseau de commutation RC2 raccordé à l'ensemble RC1 et au système de gestion de réseau NMS.

Afin de permettre l'optimisation de l'utilisation des ressources de communication du réseau radio (cellulaire), le système de gestion de réseau NMS comprend (ou est couplé à) un système (ou outil) d'optimisation OO, comme par exemple le système RNO® présenté dans la partie introductive.

L'invention propose un dispositif de traitement de données de trafic D pour le système (ou outil) d'optimisation OO, Dans l'exemple de réalisation illustré, non limitatif, le dispositif de traitement MT est intégré dans le système (ou outil) d'optimisation OO, mais il pourrait également être implanté dans un équipement de réseau ou un boîtier dédié raccordé à ce dernier.

Le dispositif de traitement de données de trafic D, selon l'invention, comprend au moins un module de traitement MT chargé, tout d'abord, de déterminer pour des éléments choisis du réseau radio au moins un modèle de trafic à partir de valeurs successives mesurées d'au moins un paramètre représentatif de ce trafic, comme par exemple le volume du trafic (exprimé en Erlangs).

On entend ici par « modèle de trafic » (ci-après appelé « modèle mesuré ») des données représentant l'évolution d'un trafic au niveau d'un élément de réseau. En d'autres termes, un modèle mesuré constitue la signature d'un trafic au niveau d'un élément de réseau.

Par ailleurs, on entend ici par « élément de réseau », tout constituant d'un réseau par lequel passent des trafics définis localement par des valeurs de paramètre(s) pouvant être mesurées ou estimées par le système de gestion de réseau NMS. Il pourra donc s'agir, par exemple, d'une cellule Ci, dans laquelle des terminaux mobiles UEj peuvent établir ou poursuivre des communications, ou d'un équipement de réseau, tel qu'un routeur ou une station de base.

Toute technique de détermination de modèle mesuré peut être envisagée. On peut par exemple partir de données fournies par le système de gestion de réseau NMS et définissant un diagramme tridimensionnel (3D) représentatif de l'évolution du trafic au niveau d'un élément de réseau, en fonction de deux variables.

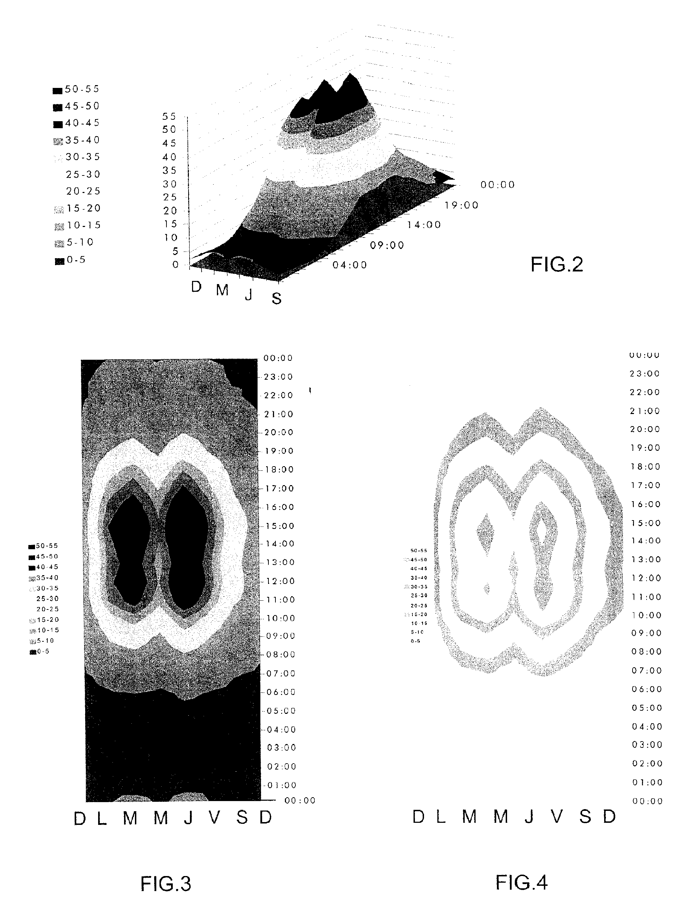

Un tel diagramme 3D est illustré à titre d'exemple sur la figure 2. Il représente l'évolution d'un trafic au niveau d'une cellule Ci en fonction du jour de la semaine et de l'heure de la journée. D'autres variables peuvent être envisagées, et notamment les jours de la semaine et les mois, ou les mois et les années.

Bien entendu, le diagramme peut être de type bidimensionnel (2D), et dans ce cas il représente l'évolution du trafic au niveau d'un élément de réseau, en fonction d'une seule variable.

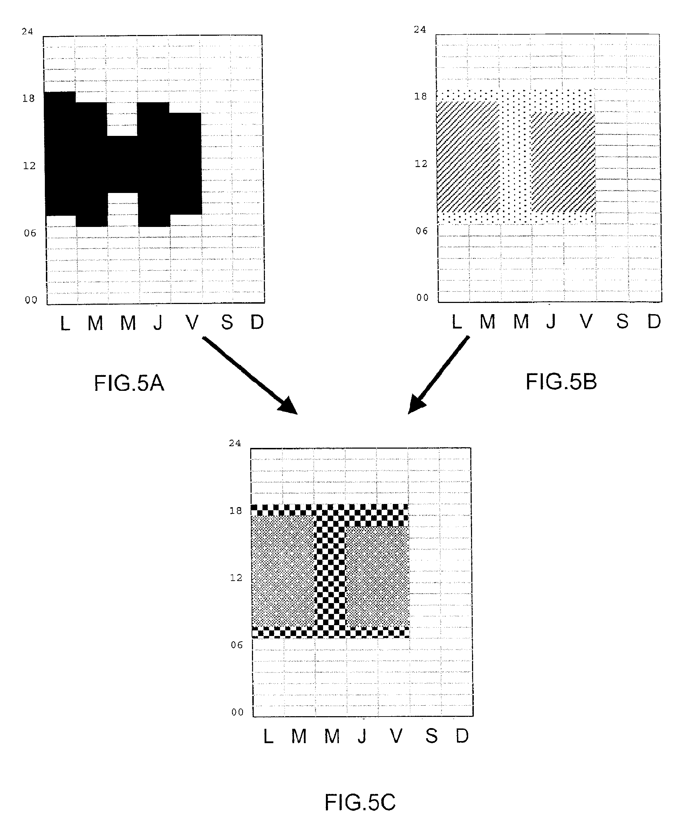

Une fois que le module de traitement MT dispose des données définissant un diagramme d'évolution, il procède à la détermination d'un modèle mesuré. Pour ce faire, il peut appliquer tout type de méthode mathématique. On peut notamment appliquer un premier traitement aux données du diagramme d'évolution de la figure 2 de manière à les projeter dans un plan, comme illustré sur la figure 3 (il est évident que dans le cas d'un diagramme d'évolution 2D, on omet ce traitement). Puis, on peut déterminer au sein de cette projection une forme simplifiée caractéristique, comme illustré sur la figure 4. Enfin, on peut appliquer cette forme simplifiée caractéristique sur une grille, comme illustré sur la figure 5A, de manière à obtenir le modèle mesuré recherché. Ici chaque case noire de la grille correspond à un trafic dépassant un seuil choisi, par exemple supérieur à 10 erlangs par heure (ou par ¼ d'heure), ou bien supérieur à 1% du trafic total sur une semaine.

Dans l'exemple illustré sur la figure 5A, le modèle mesuré est de type bidimensionnel (2D). Mais, il est possible de déterminer des modèles mesurés de type tridimensionnel (3D). Dans ce cas, on détermine à partir du diagramme d'évolution 3D une forme simplifiée caractéristique, puis on inscrit cette forme simplifiée caractéristique dans un espace décomposé en briques élémentaires de manière à déterminer le modèle mesuré 3D.

Préférentiellement, le module de traitement MT stocke, dans une première mémoire (ou une base de données) BD1 du dispositif de traitement D, chaque modèle mesuré qu'il a déterminé, en correspondance d'un identifiant représentant l'élément de réseau correspondant.

Le module de traitement MT est par ailleurs chargé de comparer les modèles mesurés à des modèles de trafic de base (ci-après appelés « modèles de base » ou « signatures (de trafic) ») représentatifs chacun d'un type de trafic, afin d'associer une signature de trafic à chaque élément de réseau pour lequel un modèle de trafic mesuré est comparable à cette signature de trafic.

On entend ici par « modèle de trafic (mesuré ou de base) » tout modèle représentatif de l'évolution d'un trafic de voix et/ou de données, en terme de télécommunication, et/ou relatif à la façon dont se déroule une communication associée à un trafic, comme par exemple la durée d'une communication.

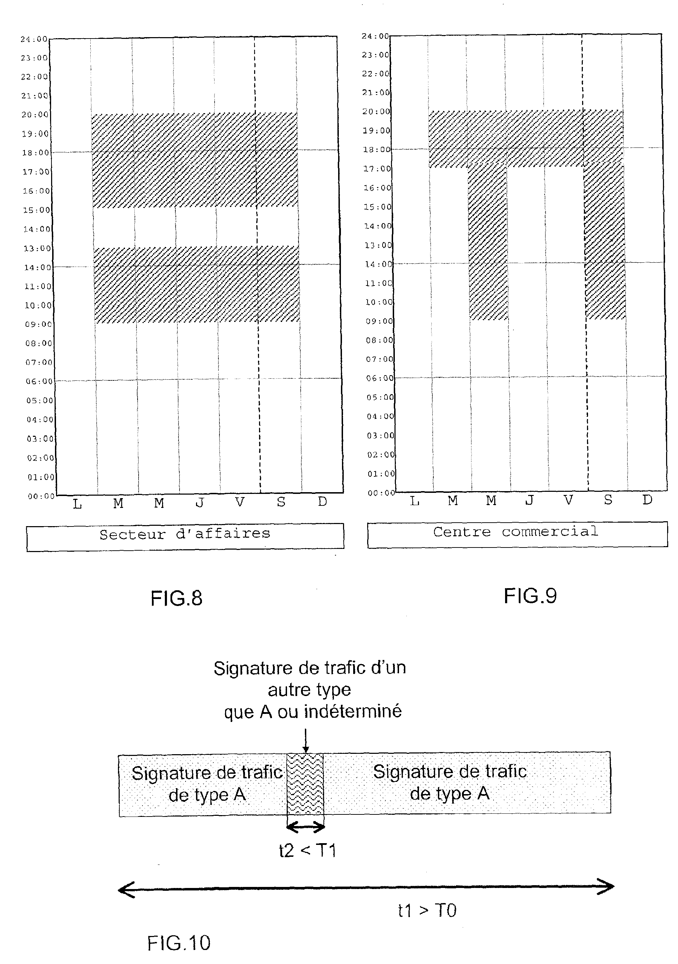

Par ailleurs, on entend ici par « type de trafic », un trafic caractéristique d'une zone géographique ou d'un environnement. Par exemple, on peut définir des modèles de base correspondant respectivement à des trafics dans des zones d'habitation (voir figure 7), des zones d'affaires (voir figure 8) et des centres commerciaux (voir figure 9).

Dans l'exemple illustré sur la figure 7, lequel correspond au trafic dans une zone d'habitation, on peut ainsi noter que :
- en dehors du mercredi et du week-end, il n'y a pas de trafic pendant les heures de travail, c'est-à-dire entre environ 8H00 et environ 18H00, le mercredi correspondant fréquemment à la présence de l'un des parents à son domicile pour s'occuper de ses enfants,
- le trafic se termine en soirée vers 22H00, sauf les vendredis et samedis soirs pour lesquels il se termine vers minuit (24H00),
- le dimanche matin le trafic est quasiment nul jusqu'à environ 14H00.

Dans l'exemple illustré sur la figure 8, lequel correspond au trafic dans une zone d'affaires, on peut noter que le trafic est important tous les jours ouvrés entre 9H00 et 13H00, puis entre 15H00 et 20H00.

Dans l'exemple illustré sur la figure 9, lequel correspond au trafic dans un centre commercial, on peut noter que le trafic n'est important que du mardi au samedi entre 17H00 et 20H00, sauf les mercredis et samedis où il est important de 9H00 à 20H00.

Il est important de noter que les modèles de base peuvent varier notablement d'un pays à l'autre, voire même d'une région à une autre, en fonction notamment du climat et/ou des habitudes de vie et de travail. Ces modèles de base sont par exemple stockés dans une seconde mémoire (ou base de données) BD2 du dispositif de traitement MT. Ils sont par exemple déterminés par un expert.

Afin de faciliter les comparaisons, un modèle mesuré présente préférentiellement un même format que le modèle de base auquel il doit être comparé. C'est notamment le cas dans l'exemple de comparaison illustré sur les figures 5A à 5C.

Dans cet exemple, il s'agit de comparer le modèle mesuré 2D d'un élément de réseau, représenté par la grille de la figure 5A, à un modèle de base 2D correspondant à un type de trafic particulier, représenté par la grille de la figure 5B. Dans l'exemple de la figure 5B, un rectangle gris hachuré correspond à une heure d'une journée pendant laquelle il existe toujours un trafic supérieur à un seuil choisi, un rectangle blanc tacheté correspond à une heure d'une journée pendant laquelle il peut exister un trafic supérieur au seuil choisi, et un rectangle vide correspond à une heure d'une journée pendant laquelle il n'existe jamais de trafic supérieur au seuil choisi. Ici, le modèle de base indique :
- qu'il existe toujours un trafic supérieur au seuil choisi les lundis et mardis entre 8H00 et 17H00 et les jeudis et vendredis entre 8H00 et 16H00,
- qu'il n'existe jamais un trafic supérieur au seuil choisi quel que soit le jour de la semaine entre 19H00 et 6H00,
- qu'il peut exister un trafic supérieur au seuil choisi le reste du temps.

Dans cet exemple, le modèle mesuré de la figure 5A correspond exactement au modèle de base de la figure 5B, comme le montre le résultat de la comparaison illustré sur la figure 5C (les rectangles gris avec des croix correspondent aux rectangles noirs de la figure 5A qui sont inscrits dans les rectangles gris hachurés de la figure 5B, et les rectangles avec des damiers noirs et blancs correspondent aux rectangles noirs de la figure 5A qui sont inscrits dans les rectangles tachetés de la figure 5B). En d'autres termes, le module de traitement MT détecte ici que le trafic (modélisé sur la figure 5A) qui a été mesuré au niveau d'un élément de réseau, par exemple une cellule Ci, correspond au type de trafic défini par le modèle de base (illustré sur la figure 5B).

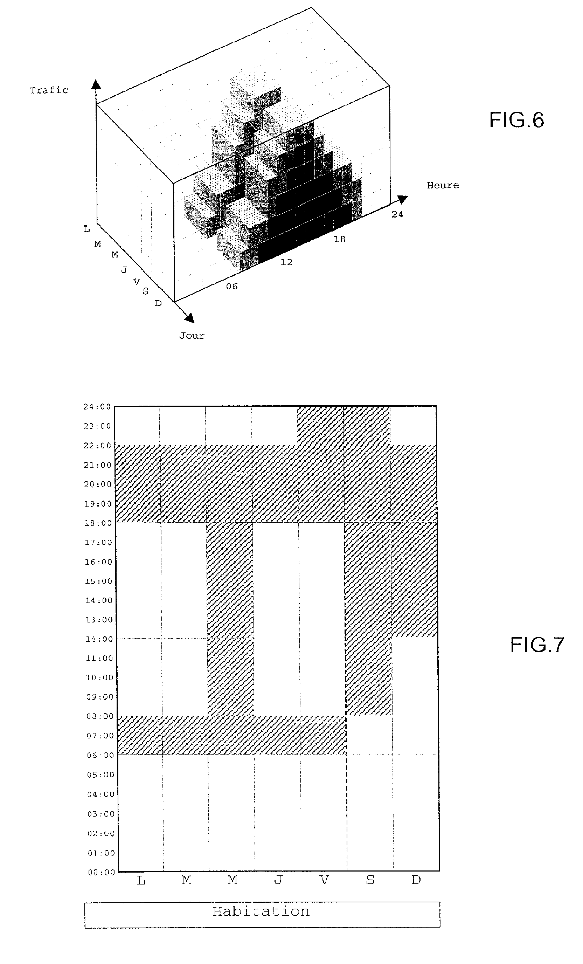

Dans l'exemple illustré sur la figure 5B, le modèle de base est de type bidimensionnel (2D). Mais, comme illustré sur la figure 6, il est possible de déterminer des modèles de base de type tridimensionnel (3D). Dans l'exemple de la figure 6, une brique noire correspond à une heure d'une journée pendant laquelle il existe toujours un trafic supérieur à un seuil choisi, une brique grise tachetée correspond à une heure d'une journée pendant laquelle il peut exister un trafic supérieur au seuil choisi, et une brique vide correspond à une heure d'une journée pendant laquelle il n'existe jamais de trafic supérieur au seuil choisi.

Toute technique de comparaison (ou combinaison de techniques de comparaison) peut être utilisée par le module de traitement MT. Par exemple, il peut effectuer ses comparaisons au moyen d'au moins un critère de proximité. Parmi les critères de proximité, on peut par exemple citer la comparaison à un seuil de distance choisi de la distance moyenne entre un élément d'un modèle mesuré et l'élément correspondant d'un modèle de base. On peut également citer la comparaison d'enveloppes.

Les critères de comparaison sont préférentiellement configurables et ajustables par l'opérateur du réseau. Par ailleurs, les conditions de proximité peuvent être éventuellement fixées par l'opérateur indépendamment de la technique de comparaison utilisée.

Si plusieurs éléments de réseau sont associés à un même modèle de base (et donc font l'objet d'un même type de trafic), le module de traitement MT peut être agencé de manière à définir un ensemble d'objets (ou object zone) qui les regroupe.

On entend ici par « objet » un élément de réseau physique, comme par exemple une cellule, ou logique, comme par exemple une adjacence définie à partir d'au moins un mouvement d'une cellule vers une autre.

Le module de traitement MT peut déterminer un ensemble d'objets en comparant des modèles mesurés soit à un ou plusieurs modèle(s) de base choisi(s) par l'opérateur du réseau et stocké(s) dans la seconde mémoire BD2, soit à tous les modèles de base stockés dans la seconde mémoire BD2.

Un modèle mesuré pouvant correspondre à plusieurs modèles de base, il est donc possible que le module de traitement MT détermine des ensembles d'objets dans lesquels chaque objet correspond à plusieurs modèles de base.

On peut également envisager que le module de traitement MT détermine des ensembles d'objets dans lesquels les objets ne correspondent à aucun modèle de base ou bien à plusieurs modèles de base différents.

Chaque ensemble d'objets déterminé par le module de traitement MT est transmis au système d'optimisation OO afin qu'il puisse l'utiliser dans le cadre d'une demande d'optimisation des ressources du réseau radio à l'initiative de l'opérateur dudit réseau.

Ces ensembles d'objets peuvent permettre à l'opérateur de mieux comprendre les comportements et/ou habitudes de ses clients en fonction des zones dans lesquelles ils habitent et/ou des zones dans lesquelles ils travaillent, et par conséquent d'adapter les ressources de son réseau et la qualité de service en conséquence. Ils peuvent également permettre à l'opérateur de concentrer l'optimisation des ressources de son réseau sur un type de trafic particulier et sur le suivi d'une qualité de service choisie en utilisant pour ce faire tous les indicateurs (consolidés) de qualité de service disponibles au niveau des objets constituant les ensembles d'objets et fournis par le système de gestion de réseau NMS.

Par ailleurs, grâce aux nouveaux ensembles d'objets, on peut définir de nouveaux critères d'optimisation pour le système d'optimisation OO.

Il est également possible de définir une politique d'interventions de maintenance, ou d'effectuer tout type d'analyse de cartographie, par exemple pour étudier la distribution spatiale des différents types de modèles de trafic afin de la corréler avec d'autres informations spatiales, ou encore de suivre l'évolution temporelle et spatiale des modèles de trafic de base associés à des zones géographiques.

L'invention propose également de suivre l'évolution temporelle des modèles mesurés afin de déterminer l'état de stabilité des trafics associés au sein d'éléments de réseau.

A cet effet et comme illustré sur la figure 1, le dispositif de traitement MT, selon l'invention, peut également comporter un module d'analyse MA. Ce dernier est tout d'abord chargé de collecter dans la première mémoire BD1 des modèles de trafic mesurés, associés à certains au moins des éléments de réseau et obtenus de façon périodique, selon une première période choisie P1, par le module de traitement MT. Cela nécessite que la première mémoire BD1 stocke pendant une durée suffisamment longue les données qui définissent les modèles de trafic mesurés successivement pour un même élément de réseau.

Le module d'analyse MA dispose ainsi périodiquement, selon une seconde période choisie P2, multiple de la première période P1 (P2 = nxP1, avec n > 1), pour chacun des éléments de réseau choisis, d'un premier ensemble de modèles mesurés. La durée de stockage des données des modèles mesurés, dans la première mémoire BD1, est par conséquent au moins égale à la seconde période P2.

Le module d'analyse MA est également chargé d'analyser les modèles de trafic qui constituent chaque premier ensemble, afin d'en déduire un état de stabilité sur chaque seconde période P2.

Pour ce faire, le module d'analyse MA peut par exemple comparer entre eux les modèles mesurés de chaque premier ensemble. En variante, il peut comparer les modèles mesurés de chaque premier ensemble à un modèle de base, qui est par exemple stocké dans la seconde mémoire BD2. Ce modèle de base est par exemple celui qui définit en fonctionnement normal le type de trafic qui passe par l'élément de réseau concerné par l'analyse de stabilité.

Toute technique de comparaison (ou combinaison de techniques de comparaison) peut être utilisée par le module d'analyse MA. Par exemple, il peut effectuer ses comparaisons au moyen d'au moins un critère de proximité. Parmi les critères de proximité, on peut par exemple citer la comparaison à un seuil de distance choisi de la distance moyenne entre un élément d'un modèle mesuré et l'élément correspondant d'un modèle de base. On peut également citer la comparaison d'enveloppes.

Le module d'analyse MA peut par exemple considérer que le trafic, passant par un élément de réseau choisi, est stable sur une seconde période P2, lorsque les n modèles mesurés sur cette seconde période P2 satisfont au(x) critère(s) de comparaison choisi(s). Le(s) critère(s) de comparaison est (sont) des critères de stabilité qui peu(ven)t par exemple être un ou plusieurs critères de proximité. Lorsqu'un critère de stabilité n'est pas satisfait sur une seconde période P2, le trafic de l'élément de réseau concerné est dit instable sur cette seconde période P2.

En variante, le module d'analyse MA peut par exemple considérer que le trafic, passant par un élément de réseau choisi, est stable sur une seconde période P2 lorsque (n - m) modèles mesurés sur cette seconde période P2 satisfont au(x) critère(s) de comparaison (et donc de stabilité) choisi(s). Le paramètre m est strictement inférieur au paramètre n, et par exemple égal à 1 ou 2. Dans cette variante, le module d'analyse MA peut donc exclure m modèles mesurés d'une analyse de n modèles mesurés d'un premier ensemble, lorsque ces m modèles mesurés satisfont à au moins un critère choisi. On peut par exemple décider que tout modèle mesuré, qui s'écarte d'une valeur supérieure à un seuil choisi du modèle de base correspondant, ou de la moyenne des modèles mesurés de son premier ensemble, peut être exclu car il correspond à un fonctionnement anormal.

On peut également décider d'exclure m modèles mesurés lorsque leur fréquence d'apparition est inférieure à une fréquence seuil choisie et/ou lorsque leur durée est inférieure à une durée seuil choisie. Une telle situation est illustrée à titre d'exemple sur la figure 10.

Plus précisément, dans cet exemple le module d'analyse MA détecte que sur une durée t1 un modèle mesuré est comparable à une signature de type A, sauf pendant une durée t2 au cours de laquelle ledit modèle mesuré est d'un type différent de A ou d'un type indéterminé. Il compare alors t1 à un premier seuil T0, puis, si t1 est supérieure à T0 il compare t2 à un deuxième seuil T1 (de préférence très petit devant T0), et si t2 est inférieure à T1 alors la durée t1 est considérée comme stable.

Le premier seuil T0 représente ici la période minimale de stabilité, et le deuxième seuil T1 représente ici la période maximale durant laquelle une autre signature est acceptée pendant une phase de stabilité.

Le module d'analyse MA peut être également chargé de suivre l'évolution de l'état de stabilité associé à au moins un élément de réseau. Pour ce faire, il compare les états de stabilité associés à un même élément de réseau, qu'il a obtenus pendant au moins deux secondes périodes P2 successives, afin de déterminer d'éventuels changements d'état de stabilité.

Au moins trois types de changement d'état de stabilité ou de changement de stabilité peuvent être déterminés.

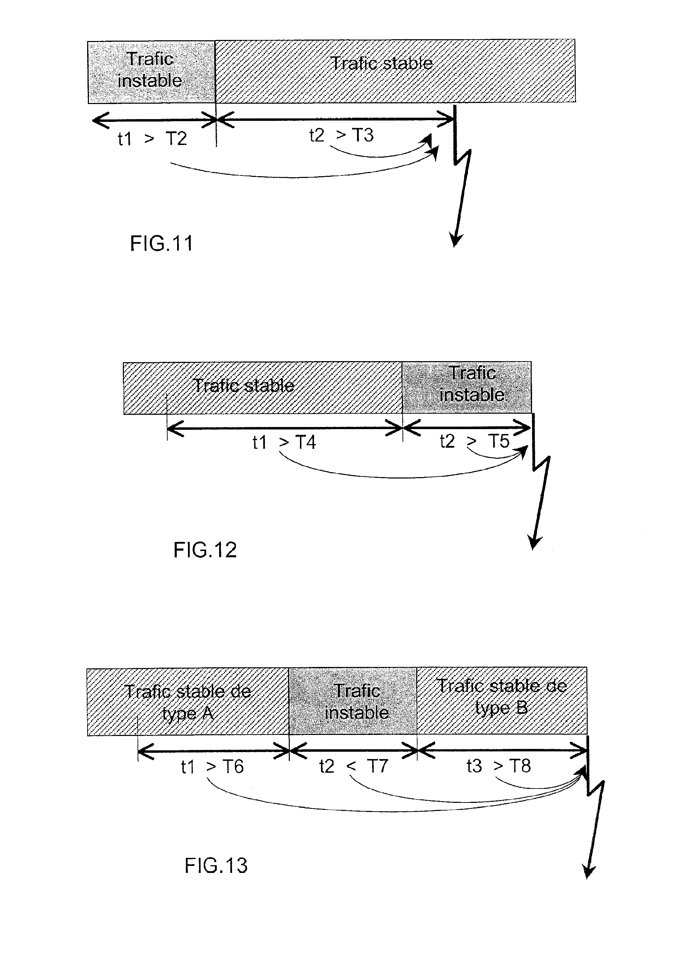

Un premier type de changement d'état de stabilité correspond aux situations dans lesquelles un état instable, sur une durée supérieure à un premier seuil choisi, précède un état stable sur une durée supérieure à un second seuil choisi (éventuellement égal au premier seuil choisi). Dans ces situations le module d'analyse MA avertit le système d'optimisation OO que le trafic concerné vient de devenir stable après une période d'instabilité. Une telle situation est illustrée à titre d'exemple sur la figure 11.

Plus précisément, dans cet exemple le module d'analyse MA détecte qu'un trafic donné est instable sur une durée t1, puis qu'il devient stable sur une durée t2. Il compare alors t1 à un troisième seuil T2 (supérieur ou égal au deuxième seuil T1), puis, si t1 est supérieure à T2 il compare t2 à un quatrième seuil T3 (supérieur ou égal au premier seuil T0), et si t2 est supérieure à T3 alors il considère que le trafic concerné est redevenu stable.

Le troisième seuil T2 représente ici la période minimale d'instabilité avant de déclencher une acquisition de stabilité, et le quatrième seuil T3 représente ici la période minimale de stabilité pour déclencher une acquisition de stabilité.

Un deuxième type de changement d'état de stabilité correspond aux situations dans lesquelles un état stable, sur une durée supérieure à un premier seuil choisi, précède un état instable sur une durée supérieure à un second seuil choisi (éventuellement égal au premier seuil choisi). Dans ces situations le module d'analyse MA avertit le système d'optimisation OO que le trafic concerné vient de devenir instable après une période de stabilité. Une telle situation est illustrée à titre d'exemple sur la figure 12.

Plus précisément, dans cet exemple le module d'analyse MA détecte qu'un trafic donné est stable sur une durée t1, puis qu'il devient instable sur une durée t2. Il compare alors t1 à un cinquième seuil T4 (supérieur ou égal au premier seuil T0), puis, si t1 est supérieure à T4 il compare t2 à un sixième seuil T5 (supérieur ou égal au deuxième seuil T1), et si t2 est supérieure à T5 alors il considère que le trafic concerné est devenu instable.

Le cinquième seuil T4 représente ici la période minimale de stabilité avant de déterminer une perte de stabilité, et le sixième seuil T5 représente ici la période minimale d'instabilité pour déterminer une perte de stabilité.

Un troisième type de changement d'état de stabilité ou de changement de stabilité correspond aux situations dans lesquelles un état stable associé à une signature de trafic de type A, sur une durée supérieure à un premier seuil choisi, précède un état instable sur une durée supérieure à un deuxième seuil choisi (inférieure au premier seuil choisi), qui précède lui-même un nouvel état stable associé à une signature de trafic de type B, sur une durée supérieure à un troisième seuil choisi (éventuellement égal au premier ou deuxième seuil choisi). La situation inverse est également possible. Dans ces situations le module d'analyse MA avertit le système d'optimisation OO qu'un changement de stabilité (c'est-à-dire un changement de type de trafic) est survenu. Une telle situation est illustrée à titre d'exemple sur la figure 13.

Plus précisément, dans cet exemple le module d'analyse MA détecte qu'un trafic de type A est stable sur une durée t1, puis qu'il devient instable sur une durée t2, et qu'il redevient stable, mais associé à un type B, sur une durée t3. Il compare alors t1 à un septième seuil T6 (supérieur ou égal au premier seuil T0), puis, si t1 est supérieure à T6 il compare t2 à un huitième seuil T7 (inférieur ou égal au troisième seuil T2 et au sixième seuil T5), et si t2 est inférieure à T7 il compare t3 à un neuvième seuil T8 (supérieur ou égal au premier seuil T0), et si t3 est supérieure à T9 alors il considère qu'un nouveau trafic de type B, stable, s'est installé.

Il est important de noter que la durée t2 peut être nulle, et donc que l'on peut déterminer un changement de stabilité sans phase d'instabilité intermédiaire.

Le septième seuil T6 représente ici la période minimale de l'ancienne stabilité avant de déterminer un changement de stabilité, le huitième seuil T7 représente ici la période maximale d'instabilité entre l'ancienne stabilité et la nouvelle stabilité pour déterminer un changement de stabilité, et le neuvième seuil T8 représente ici la période minimale pour la nouvelle stabilité avant de déterminer un changement de stabilité.

L'opérateur du réseau peut définir une stratégie d'optimisation en utilisant certaines ressources avec différents niveaux d'expertise en fonction de la situation de stabilité détectée par le module d'analyse MA du dispositif de traitement MT. Par exemple, des plans d'optimisation standard à appliquer peuvent être prédéfinis en cas de stabilité durable. En présence d'instabilités, une analyse approfondie des causes d'instabilité peut être nécessaire, de manière à définir un plan d'optimisation adapté.

Par ailleurs, l'analyse de stabilité peut servir à déclencher des tests de diagnostic ou des interventions d'adaptation, ou bien à effectuer tout type d'analyse de cartographie, par exemple pour étudier l'évolution temporelle et spatiale des modèles de trafic de base associés à des zones géographiques.

Le dispositif de traitement D selon l'invention, et notamment son module de traitement MT ainsi que son éventuel module d'analyse MA, peuvent être réalisés sous la forme de circuits électroniques, de modules logiciels (ou informatiques), ou d'une combinaison de circuits et de logiciels.

L'invention ne se limite pas aux modes de réalisation de dispositif de traitement et de système (ou outil) d'optimisation de réseau décrits ci-avant, seulement à titre d'exemple, mais elle englobe toutes les variantes que pourra envisager l'homme de l'art dans le cadre des revendications ci-après.

## Revendications

1. Dispositif de traitement de données de trafic (D), pour un système d'optimisation (OO) d'un réseau de communication comportant des éléments de réseau (Ci) par lesquels passent des trafics définis localement par des valeurs de paramètre(s), **caractérisé en ce qu'**il comprend des moyens de traitement (MT) agencés pour i) déterminer pour des éléments choisis dudit réseau au moins un modèle de trafic à partir de valeurs successives mesurées d'au moins un paramètre représentatif dudit trafic, et ii) comparer lesdits modèles de trafic déterminés à des modèles de trafic de base représentatifs chacun d'un type de trafic, de manière à associer à l'un desdits éléments de réseau au moins un modèle de trafic de base lorsqu'un modèle de trafic mesuré qui lui correspond est comparable audit modèle de trafic de base.

2. Dispositif selon la revendication 1, **caractérisé en ce que** lesdits moyens de traitement (MT) sont agencés pour définir des ensembles d'objets regroupant chacun des éléments de réseau associés à au moins un même modèle de trafic de base.

3. Dispositif selon la revendication 2, **caractérisé en ce que** lesdits ensembles d'objets sont choisis parmi au moins des groupes d'éléments de réseau et des groupes dits de mouvement.

4. Dispositif selon l'une des revendications 1 à 3, **caractérisé en ce que** lesdits moyens de traitement (MT) sont agencés pour effectuer ladite comparaison au moyen d'au moins un critère de proximité.

5. Dispositif selon l'une des revendications 1 à 4, **caractérisé en ce que** lesdits moyens de traitement (MT) sont agencés pour déterminer lesdits modèles de trafic à partir de valeurs successives d'au moins un paramètre représentatif dudit trafic en fonction de dates choisies et d'heures choisies de ces dates.

6. Dispositif selon la revendication 5, **caractérisé en ce que** lesdits moyens de traitement (MT) sont agencés pour déterminer certains au moins desdits modèles de trafic sous une forme bidimensionnelle.

7. Dispositif selon l'une des revendications 5 et 6, **caractérisé en ce que** lesdits moyens de traitement (MT) sont agencés pour déterminer certains au moins desdits modèles de trafic sous une forme tridimensionnelle.

8. Dispositif selon l'une des revendications 1 à 7, **caractérisé en ce qu'**il comprend des moyens d'analyse (MA) agencés pour i) collecter des modèles de trafic, associés à certains au moins desdits éléments de réseau et obtenus de façon périodique, selon une première période choisie, de manière à disposer périodiquement, selon une seconde période multiple de la première période, pour chacun de ces éléments de réseau, d'un premier ensemble de modèles de trafic, et ii) analyser lesdits modèles de trafic de chaque premier ensemble de manière à déduire un état de stabilité pour chaque premier ensemble obtenu pendant chaque seconde période.

9. Dispositif selon la revendication 8, **caractérisé en ce que** lesdits moyens d'analyse (MA) sont agencés pour analyser lesdits modèles de trafic de chaque premier ensemble en les comparant entre eux.

10. Dispositif selon la revendication 8, **caractérisé en ce que** lesdits moyens d'analyse (MA) sont agencés pour analyser lesdits modèles de trafic de chaque premier ensemble en les comparant chacun à un modèle de trafic de base.

11. Dispositif selon l'une des revendications 9 et 10, **caractérisé en ce que** lesdits moyens d'analyse (MA) sont agencés pour effectuer ladite comparaison au moyen d'au moins un critère de proximité.

12. Dispositif selon l'une des revendications 8 à 11, **caractérisé en ce que** lesdits moyens d'analyse (MA) sont agencés pour déterminer des changements d'état de stabilité par comparaison d'états de stabilité associés à un même élément de réseau et obtenus pendant au moins deux secondes périodes successives.

13. Dispositif selon l'une des revendications 8 à 12, **caractérisé en ce que** lesdits moyens d'analyse (MA) sont agencés pour déduire certains au moins desdits états de stabilité en excluant de leur comparaison l'un au moins des modèles de trafic de l'ensemble qui satisfait à au moins un critère choisi.

14. Système d'organisation (OO) pour un réseau de communication comportant des éléments de réseau (Ci) par lesquels passent des trafics définis localement par des valeurs de paramètre(s), **caractérisé en ce qu'**il comprend un dispositif de traitement (D) selon l'une des revendications précédentes.
